# EUROPEAN PATENT APPLICATION

(11) **EP 4 693 714 A1**
(43) Date of publication of application: **11.02.2026**
(21) Application number: 25186359.3
(22) Date of filing: 30.06.2025
(51) Int. Cl.: H01M 50/586, H01M 10/04, H01M 50/477, H01M 50/474, H01M 50/55, H01M 50/593, H01M 50/548, H01M 50/48

(54) **SECONDARY BATTERY**

(30) Priority: 01.08.2024 KR 20240102274
(71) Applicant: SAMSUNG SDI CO., LTD., Yongin-si, Gyeonggi-do 17084 (KR)
(72) Inventor: SONG, Daseong, 17084 Yongin-si, Gyeonggi-do (KR); CHOI, Hwanjun, 17084 Yongin-si, Gyeonggi-do (KR)
(74) Representative: Gulde & Partner

(57) **Abstract**

A secondary battery (100) may include an electrode assembly (110) including a first electrode tab (111) at an upper portion of the electrode assembly (110) and a second electrode tab (112) at a lower portion of the electrode assembly (110), a first insulating member (120) on the upper portion of the electrode assembly (110), a second insulating member (130) on the lower portion of the electrode assembly (110), and a retainer (140) stretched in length and attached to a side surface of each of the electrode assembly (110), the first insulating member (120), and the second insulating member (130).

## Description

### BACKGROUND

### FIELD

Embodiments of the present disclosure relate to a secondary battery.

### DESCRIPTION OF THE RELATED ART

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Recently, active research has been conducted that is aimed at improving the capacity of secondary batteries. For example, in a secondary battery where an electrode assembly is accommodated within a case and assembled with a cap assembly, an insulating member may be interposed between the cap assembly and the electrode assembly. In order to increase the internal space of the case, it may be desirable and/or necessary to reduce the thickness of the insulating member. However, such a reduction in thickness can make it difficult to reliably secure the insulating member to the electrode assembly.

The above information disclosed in this Background section is for enhancement of understanding of the background of the present disclosure, and therefore, it may contain information that does not constitute related (or prior) art.

### SUMMARY

In view of the above, aspects of one or more embodiments of the present disclosure are directed to a secondary battery that addresses the aforementioned issues.

However, the technical problem to be solved by the present disclosure is not limited to the above problem, and other problems not mentioned herein, and aspects and features of the present disclosure that would address such problems, will be clearly understood by those skilled in the art from the description of the present disclosure below

According to an aspect of the present disclosure, a secondary battery includes an electrode assembly including a first electrode tab at an upper portion of the electrode assembly and a second electrode tab at a lower portion of the electrode assembly, a first insulating member arranged on the upper portion of the electrode assembly, a second insulating member arranged on the lower portion of the electrode assembly, and a retainer stretched in length and attached to side surfaces of the electrode assembly, the first insulating member, and the second insulating member (e.g., attached to a side surface of each of the electrode assembly, the first insulating member, and the second insulating member). The length of the retainer may extend in a direction that extends parallel to a direction which extends between the first electrode tab and the second electrode tab. Hence, as the retainer is attached to the side surfaces in a stretched state, the retainer not only insulates the side surface in a compact manner, but also keeps the electrode assembly, the first insulating member and the second insulating member in place relative to each other, providing a compact and easy to handle electrode assembly that allows for the formation of a compact secondary battery.

According to one or more embodiments, the retainer may include a first retainer attached to a first side surface of each of the electrode assembly, the first insulating member, and the second insulating member. The retainer may include a second retainer attached to a second side surface of each of the electrode assembly, the first insulating member, and the second insulating member. The second side surfaces of the electrode assembly, the first insulating member, and the second insulating member may be opposite to the first side surfaces of the electrode assembly, the first insulating member, and the second insulating member. An advantage of this embodiment may be that the electrode assembly, the first insulating member and the second insulating member are held by the first and second retainers on opposite sides, e.g. symmetrically.

According to one or more embodiments, the retainer may include a first attachment portion that may be attached to the electrode assembly. The retainer may include a second attachment portion that may be attached to the first insulating member The retainer may include a third attachment portion that may be attached to the second insulating member. The retainer may include a first elastic portion positioned that may be between the first attachment portion and the second attachment portion The first elastic portion may have elasticity. The retainer may include a second elastic portion that may be positioned between the first attachment portion and the third attachment portion. The second elastic portion may have elasticity. The elasticity of the first elastic portion may be higher than the elasticity of the first attachment portion, the elasticity of the second attachment portion and/or the elasticity of the third attachment portion. The elasticity of the second elastic portion may be higher than the elasticity of the first attachment portion, the elasticity of the second attachment portion and/or the elasticity of the third attachment portion. An advantage of this embodiment may be that in case one of the electrode assembly, the first insulating member and the second insulating member should relatively move, e.g. due to thermal expansion, the elasticity prevents the retainer from ripping.

According to one or more embodiments, the first elastic portion may be stretched in a first direction. The first direction may correspond to an upward direction toward the upper portion of the electrode assembly. The length of the retainer may extend along the first direction. An advantage of this embodiment may be that in use, gravity may assist the retainer in holing the electrode assembly, the first insulating member and the second insulating member at each other such that the retainer may even be formed thinner.

According to one or more embodiments, the first elastic portion may exert an elastic force in a second direction opposite to the first direction. An advantage of this embodiment may be that gravity assist the retainer even further.

According to one or more embodiments, the second attachment portion may pull the first insulating member in the second direction by the elastic force of the first elastic portion to secure the first insulating member to the electrode assembly. An advantage of this embodiment may be that position of the first insulating member relative to the electrode assembly is secured.

According to one or more embodiments, the second elastic portion may be stretched in a second direction, and the second direction may correspond to a downward direction toward the lower portion of the electrode assembly. An advantage of this embodiment may be that gravity, which may push the electrode assembly towards the second elastic portion, may assist the retainer in holding the electrode assembly and the second insulating members in place relative to each other. The upward direction may be a direction that is opposite to the downward direction. When the battery is in use, the upward direction may be the vertical direction. When the battery is in use, the downward direction may point in the direction of gravity.

According to one or more embodiments, the second elastic portion may exert an elastic force in a direction opposite to the second direction. The direction opposite to the second direction may be the first direction. An advantage of this embodiment may be that the first and second insulating members are pulled towards the electrode assembly, which is placed between the electrode assembly, providing more mechanical stability.

According to one or more embodiments, the third attachment portion may pull the second insulating member in the first direction or the direction opposite to the second direction by the elastic force of the second elastic portion to secure the second insulating member to the electrode assembly. An advantage of this embodiment may be that the first and second insulating members are pulled towards the electrode assembly, which is placed between the electrode assembly, providing more mechanical stability.

According to one or more embodiments, an unstretched length of the first elastic portion may be smaller than a length of the second attachment portion. A stretched length of the first elastic portion may be equal to or greater than the length of the second attachment portion. An advantage of this embodiment may be that in a stretched state, the first elastic portion may be easy to place in its stretched state,

According to one or more embodiments, each of the first elastic portion and the second elastic portion may include a rubber material having elasticity. An advantage of this embodiment may be that rubber material is mechanically stable and cheap.

According to one or more embodiments, the rubber material may include at least one of nitrile-butadiene rubber (NBR), natural rubber (NR), isoprene rubber (IR), butadiene rubber (BR), styrene-butadiene rubber (SBR), chloroprene rubber (CR), isobutylene isoprene rubber (IIR), ethylene propylene terpolymers (EPDM), or acrylic elastomers (ACM). An advantage of this embodiment may be that a rubber material with desired properties, e.g. thermal and/or mechanical and/or chemical properties, can be used.

According to another aspect of the present disclosure, a secondary battery includes an electrode assembly including a first electrode tab and a second electrode tab at an upper portion of the electrode assembly, an insulating member arranged on the upper portion of the electrode assembly, and a retainer stretched in length and attached to side surfaces of the electrode assembly and the insulating member (e.g., attached to a side surface of each of the electrode assembly and the insulating member). The length of the retainer may extend parallel to a direction in which any of the first electrode tab and the second electrode tab protrudes from the insulating member. The length direction may extend parallel to a direction which extends between the first electrode tab and the second electrode tab. Hence, as the retainer is attached to the side surfaces in a stretched state, the retainer not only insulates the side surface in a compact manner, but also keeps the electrode assembly and the insulating member in place relative to each other, providing a compact and easy to handle electrode assembly that allows for the formation of a compact secondary battery.

According to one or more embodiments, the retainer may include a first retainer attached to a first side surface of each of the electrode assembly and the insulating member. The retainer may include a second retainer attached to a second side surface of each of the electrode assembly and the insulating member. The second side surfaces of the electrode assembly and the insulating member may be opposite to the first side surfaces of the electrode assembly and the insulating member. An advantage of this embodiment may be that the electrode assembly and the insulating member are held by the first and second retainers on opposite sides, e.g. symmetrically.

According to one or more embodiments, the retainer may include a first attachment portion attached to the electrode assembly, a second attachment portion attached to the insulating member, and an elastic portion positioned between the first attachment portion and the second attachment portion, the elastic portion having elasticity. The elasticity of the elastic portion may be higher than the elasticity of the first attachment portion and/or the elasticity of the second attachment portion. An advantage of this embodiment may be that in case one of the electrode assembly and the insulating member should relatively move, e.g. due to thermal expansion, the elasticity prevents the retainer from ripping.

According to one or more embodiments, the elastic portion may be stretched in a first direction, and the first direction may correspond to an upward direction toward the upper portion of the electrode assembly. The length of the retainer may extend along the first direction. An advantage of this embodiment may be that in use, gravity may assist the retainer in holing the electrode assembly and the insulating member at each other such that the retainer may even be formed thinner.

According to one or more embodiments, the elastic portion may exert an elastic force in a direction opposite to the first direction. The direction opposite to the first direction may be the second direction. An advantage of this embodiment may be that the insulating member and the electrode assembly are pulled towards each other, providing more mechanical stability.

According to one or more embodiments, the second attachment portion may pull the insulating member in the second direction or the direction opposite to the first direction by the elastic force of the elastic portion to secure the insulating member to the electrode assembly. An advantage of this embodiment may be that the insulating member is pulled towards the electrode assembly, providing more mechanical stability.

According to one or more embodiments, the elastic portion may include a rubber material having elasticity. An advantage of this embodiment may be that rubber material is mechanically stable and cheap.

According to one or more embodiments, the rubber material may include at least one of nitrile-butadiene rubber (NBR), natural rubber (NR), isoprene rubber (IR), butadiene rubber (BR), styrene-butadiene rubber (SBR), chloroprene rubber (CR), isobutylene isoprene rubber (IIR), ethylene propylene terpolymers (EPDM), or acrylic elastomers (ACM). An advantage of this embodiment may be that a rubber material with desired properties, e.g. thermal and/or mechanical and/or chemical properties, can be used.

According to one or more embodiments of the present disclosure, the elastic retainer is stretched and attached to the electrode assembly and the insulating member, thereby securing the insulating member to the electrode assembly. An advantage of this embodiment may be that the insulating member and the electrode assembly are easy to handle and secured against movement relative to each other in a cost effective and compact manner.

According to one or more embodiments of the present disclosure, the thickness of the insulating member can be reduced to provide additional space within the case. An advantage of this embodiment may be that the compactness can be further improved.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a cross-sectional view of a secondary battery according to one or more embodiments of the present disclosure.
FIG. 2 is a side view of a retainer according to one or more embodiments of the present disclosure.
FIG. 3 is a cross-sectional view of a secondary battery before a retainer is attached, according to one or more embodiments of the present disclosure.
FIG. 4 is a cross-sectional view of a secondary battery after a retainer is attached, according to one or more embodiments of the present disclosure.
FIG. 5 is a perspective view of a secondary battery 100 according to one or more embodiments of the present disclosure.
FIG. 6 is a cross-sectional view of a secondary battery 200 according to one or more embodiments of the present disclosure.
FIG. 7 is a side view of a retainer according to one or more embodiments of the present disclosure.
FIG. 8 is a cross-sectional view of a secondary battery before a retainer is attached, according to one or more embodiments of the present disclosure.
FIG. 9 is a cross-sectional view of a secondary battery after a retainer is attached, according to one or more embodiments of the present disclosure.
FIG. 10 is a perspective view of a secondary battery according to one or more embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

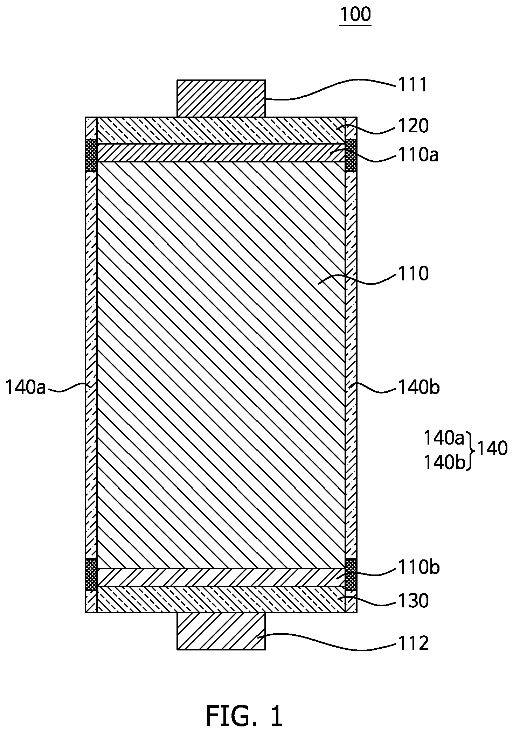

FIG. 1 is a cross-sectional view of a secondary battery according to one or more embodiments of the present disclosure.

Referring to FIG. 1, a secondary battery 100 according to one or more embodiments of the present disclosure may include an electrode assembly 110, a first insulating member 120, a second insulating member 130, and a retainer 140.

The electrode assembly 110 may include a first electrode having a first electrode tab 111, a second electrode having a second electrode tab 112, and a separator. Here, the first electrode may be a positive electrode, and the second electrode may be a negative electrode, or vice versa. For example, the electrode assembly 110 may be a stacked-type (kind) electrode assembly 110 in which the first electrode and the second electrode are alternately stacked with a separator in between. In another example, the electrode assembly 110 may be a wound-type (kind) electrode assembly 110 in which the first electrode and the second electrode are wound together with a separator, which serves as an insulator, interposed between the first and second electrodes. Alternatively, in one or more embodiments, the electrode assembly 110 may be configured as any other structure that includes the first electrode and the second electrode. The structures of the electrode assembly 110 described above are merely examples, and the present disclosure is not limited thereto.

The first electrode tab 111 may be separately formed and connected to an uncoated portion 110a of the first electrode, or may be formed by punching out a portion of the uncoated portion 110a. The first electrode tab 111 may extend from the uncoated portion 110a and may be inserted through the first insulating member 120. Similarly, the second electrode tab 112 may be separately formed and connected to an uncoated portion 110b of the second electrode, or may be formed by punching out a portion of the uncoated portion 110b. The second electrode tab 112 may extend from the uncoated portion 110b and may be inserted through the second insulating member 130.

The electrode assembly 110 may include the first electrode tab 111 and the second electrode tab 112, which are respectively provided at the upper and lower portions of the electrode assembly 110. This arrangement allows for a reduction in the size of current-collecting components compared to a structure where both the first and second electrode tabs are placed on the same side. As a result, the utilization efficiency of the internal space of a case 151 (e.g., the efficiency in which the internal space of the case 151 is used) can be improved. Here, the arrangement of the first electrode tab 111 and the second electrode tab 112 may vary depending on the structure of a driving device in (or to) which the secondary battery 100 is mounted.

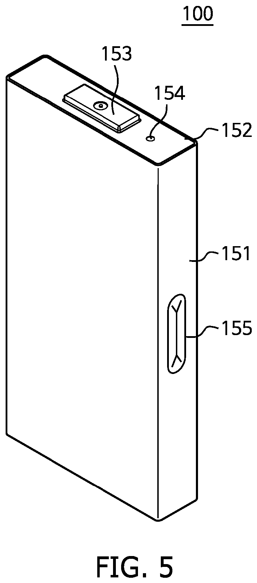

The first insulating member 120 may be arranged on the upper portion of the electrode assembly 110. The first insulating member 120 may serve as an insulator arranged between the electrode assembly 110 and a first cap assembly 152 (see, *e.g.,* FIG. 5). The first insulating member 120 may be fixedly arranged on the electrode assembly 110 by the retainer 140 attached to a side surface of (e.g., of each of) the electrode assembly 110 and the first insulating member 120 (e.g., attached to a side surface of the electrode assembly 110 and a side surface of the first insulating member 120).

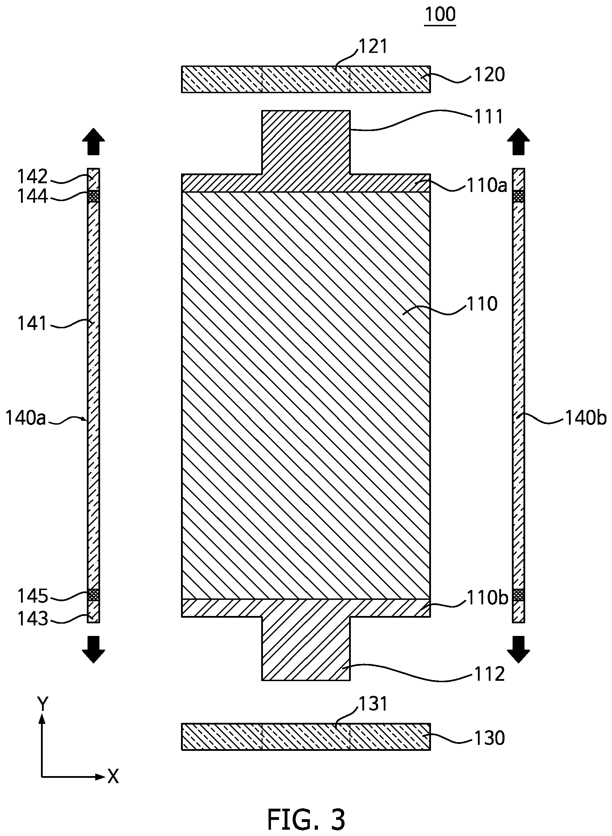

The first insulating member 120 may include a first through-hole 121 *(see, e.g.,* FIG. 3). The first electrode tab 111 may be inserted through the first through-hole 121, thereby passing through the first insulating member 120. The first electrode tab 111 may then be connected to the first cap assembly 152 (see, *e.g.,* FIG. 5), which is arranged on the first insulating member 120 (e.g., an upper surface of the first insulating member 120).

The second insulating member 130 may be arranged on the lower portion of the electrode assembly 110. The second insulating member 130 may serve as an insulator arranged between the electrode assembly 110 and a second cap assembly. The second insulating member 130 may be fixedly arranged on the electrode assembly 110 by the retainer 140 attached to a side surface of (e.g., of each of) the electrode assembly 110 and the second insulating member 130 (e.g., attached to a side surface of the electrode assembly 110 and a side surface of the second insulating member 130).

The second insulating member 130 may include a second through-hole 131 (see, e.g., FIG. 3), through which the second electrode tab 112 may be inserted, allowing the second electrode tab 112 to pass through the second insulating member 130. The second electrode tab 112 may then be connected to the second cap assembly arranged on the second insulating member 130 (e.g., a lower surface of the second insulating member 130).

The retainer 140 may be elongated in length and attached to side surfaces of the electrode assembly 110, the first insulating member 120, and the second insulating member 130.

The retainer 140 may include a first retainer 140a and a second retainer 140b. The first retainer 140a may be attached to one side surface of each of the electrode assembly 110, the first insulating member 120, and the second insulating member 130. The second retainer 140b may be attached to the other side surface (e.g., the opposite side surface) of each of the electrode assembly 110, the first insulating member 120, and the second insulating member 130.

The retainer 140 may be in the form of a sheet, with one surface having adhesive properties for attachment to the electrode assembly 110, the first insulating member 120, and the second insulating member 130. In one or more embodiments, the opposite surface of the retainer 140 may also have adhesive properties.

The retainer 140 may be interposed between the case 151(see, *e.g.,* FIG. 5), which accommodates the electrode assembly 110, and the side surfaces of the electrode assembly 110, the first insulating member 120, and the second insulating member 130. This configuration can prevent or reduce the movement of the electrode assembly 110 and protect the electrode assembly 110 from external impacts.

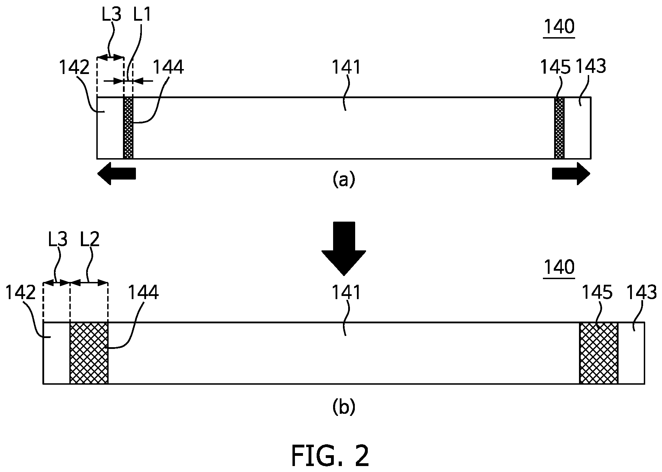

FIG. 2 is a side view of a retainer according to one or more embodiments of the present disclosure.

Referring to FIG. 2, the retainer 140 according to one or more embodiments of the present disclosure may include a first attachment portion 141, a second attachment portion 142, a third attachment portion 143, a first elastic portion 144, and a second elastic portion 145.

The first attachment portion 141 may be attached (adhered) to the electrode assembly 110. The first attachment portion 141 may have adhesion (e.g., may include an adhesive or have adhesive properties) on one surface for attachment to the electrode assembly 110. In one or more embodiments, the opposite surface of the first attachment portion 141 may also have adhesion, for example, for attachment to the case 151.

The second attachment portion 142 may be attached to the first insulating member 120. The second attachment portion 142 may have adhesion (e.g., may include an adhesive or have adhesive properties) on one surface for attachment to the first insulating member 120. In one or more embodiments, the opposite surface of the second attachment portion 142 may also have adhesion, for example, for attachment to the case 151.

The third attachment portion 143 may be attached to the second insulating member 130. The third attachment portion 143 may have adhesion (e.g., may include an adhesive or have adhesive properties) on one surface for attachment to the second insulating member 130. In one or more embodiments, the opposite surface of the third attachment portion 143 may also have adhesion, for example, for attachment to the case 151.

Each of the first to third attachment portions 141, 142, and 143 may be a tape including an insulating material. Each of the first to third attachment portions 141, 142, and 143 may include an insulating material such as polyethylene, polyacetylene, polytetrafluoroethylene (PTFE), nylon, polyimide, polyethylene terephthalate, polypropylene, and/or the like. However, the present disclosure is not limited thereto.

The first elastic portion 144 may be positioned between the first attachment portion 141 and the second attachment portion 142. The first elastic portion 144 may be thermally fused to the first attachment portion 141 and the second attachment portion 142. However, the present disclosure is not limited thereto.

The first elastic portion 144 may have elasticity. The first elastic portion 144 may be stretched in a longitudinal direction and, once stretched, may exert an elastic force in a direction opposite to a stretching direction of the first elastic portion 144.

As shown in (a) of FIG. 2, an unstretched length L1 of the first elastic portion 144, which is a length before being stretched, may be smaller than a length L3 of the second attachment portion 142. As shown in (b) of FIG. 2, the retainer 140 may be stretched and attached to the side surfaces of the electrode assembly 110, the first insulating member 120, and the second insulating member 130. A stretched length L2 of the first elastic portion 144, which is a length after being stretched, may be equal to or greater than the length L3 of the second attachment portion 142. The unstretched and stretched lengths L1 and L2 of the first elastic portion 144, as well as the length of the second attachment portion 142, may vary depending on the dimensions of the electrode assembly and the first insulating member.

The second elastic portion 145 may be positioned between the first attachment portion 141 and the third attachment portion 143. The second elastic portion 145 may be connected to the first attachment portion 141 and the third attachment portion 143 through thermal fusion. However, the present disclosure is not limited thereto.

The second elastic portion 145 may have elasticity. The second elastic portion 145 may be stretched in a longitudinal direction and, once stretched, may exert an elastic force in a direction opposite to a stretching direction of the second elastic portion 145.

As shown in (a) of FIG. 2, an unstretched length of the second elastic portion 145, which is a length before being stretched, may be smaller than a length of the third attachment portion 143. As shown in (b) of FIG. 2, the retainer 140 may be stretched and attached to the side surfaces of the electrode assembly 110, the first insulating member 120, and the second insulating member 130. A stretched length of the second elastic portion 145, which is a length after being stretched, may be equal to or greater than the length of the third attachment portion 143. The unstretched and stretched lengths of the second elastic portion 145, as well as the length of the third attachment portion 143, may vary depending on the dimensions of the electrode assembly and the first insulating member.

Each of the first elastic portion 144 and the second elastic portion 145 may include a rubber material having elasticity. For example, each of the first elastic portion 144 and the second elastic portion 145 may include, but is not limited to, at least one of nitrile-butadiene rubber (NBR), natural rubber (NR), isoprene rubber (IR), butadiene rubber (BR), styrene-butadiene rubber (SBR), chloroprene rubber (CR), isobutylene isoprene rubber (IIR), ethylene propylene terpolymers (EPDM), or acrylic elastomers (ACM) having elasticity. In one or more embodiments, each of the first elastic portion 144 and the second elastic portion 145 may include, but is not limited to, a porous rubber material to provide elasticity.

In one or more embodiments, the first elastic portion 144 and the second elastic portion 145 may be formed of the same material as the first to third attachment portions 141, 142, and 143. For example, the entire retainer 140 may be entirely formed of the same material. In such embodiments, in order to provide elasticity to the first elastic portion 144 and the second elastic portion 145, each of the first elastic portion 144 and the second elastic portion 145 may be formed to have a thickness different from a thickness of each of the first to third attachment portions 141, 142, and 143. In one or more embodiments, an additional elastic layer may be formed on the first elastic portion 144 and the second elastic portion 145. Further, in one or more embodiments, elasticity may be imparted to the first elastic portion 144 and the second elastic portion 145 through a separate post-processing such as a perforation or a surface treatment.

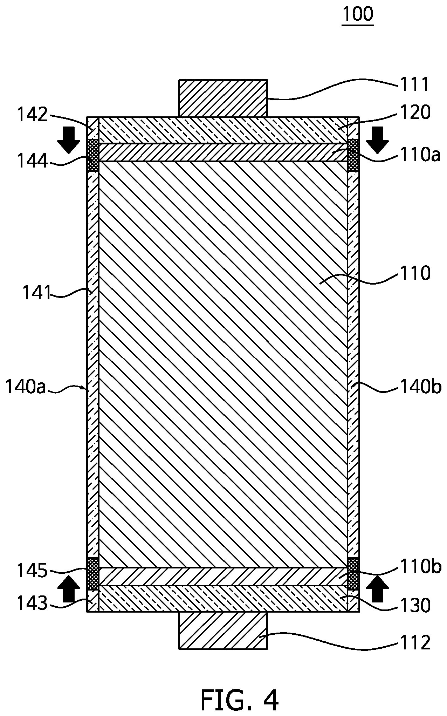

FIG. 3 is a cross-sectional view of a secondary battery before a retainer is attached, according to one or more embodiments of the present disclosure. FIG. 4 is a cross-sectional view of a secondary battery after a retainer is attached, according to one or more embodiments of the present disclosure.

Referring to FIG. 3, the first elastic portion 144 according to one or more embodiments of the present disclosure may be stretched in a first direction. Here, the first direction (a positive Y-axis direction) corresponds to an upward direction toward the upper portion of the electrode assembly 110 on which the first insulating member 120 is arranged.

The second elastic portion 145 may be stretched in a second direction. Here, the second direction (a negative Y-axis direction) corresponds to a downward direction toward the lower portion of the electrode assembly 110 on which the second insulating member 130 is arranged.

The first insulating member 120 may be arranged on the upper portion of the electrode assembly 110, and the second insulating member 130 may be arranged on the lower portion of the electrode assembly 110.

The first elastic portion 144 may be stretched to allow the second attachment portion 142 to be attached to the first insulating member 120. The second elastic portion 145 may be stretched to allow the third attachment portion 143 to be attached to the second insulating member 130.

Referring to FIG. 4, the first attachment portion 141 may be attached to the electrode assembly 110, the second attachment portion 142 may be attached to the first insulating member 120, and the third attachment portion 143 may be attached to the second insulating member 130.

The first elastic portion 144 may exert an elastic force in the second direction, opposite to the first direction. By the elastic force of the first elastic portion 144, the second attachment portion 142 may pull the first insulating member 120 in the second direction to secure it to the electrode assembly 110.

The second elastic portion 145 may exert an elastic force in the first direction, opposite to the second direction. By the elastic force of the second elastic portion 145, the third attachment portion 143 may pull the second insulating member 130 in the first direction to secure it to the electrode assembly 110.

FIG. 5 is a perspective view of a secondary battery 100 according to one or more embodiments of the present disclosure.

Referring to FIG. 5, the secondary battery 100 according to one or more embodiments of the present disclosure may include the electrode assembly 110 (see, *e.g.,* FIG. 1), the case 151 accommodating the electrode assembly 110, and the first cap assembly 152 and the second cap assembly that seal openings of the case 151. The openings may be formed at both ends (e.g., opposite ends) of the case 151. The first cap assembly 152 may seal the opening formed at one end of the case 151, and the second cap assembly may seal the opening formed at the other end of the case 151. The electrode assembly 110, the first insulating member 120, the second insulating member 130, and the retainer 140 may be accommodated within the case 151. The first insulating member 120 may be arranged between the electrode assembly 110 and the first cap assembly 152. The second insulating member 130 may be arranged between the electrode assembly 110 and the second cap assembly. The retainer 140 may be attached to both side surfaces (e.g., opposite side surfaces) of the electrode assembly 110, the first insulating member 120, and the second insulating member 130 and may be arranged within the case 151.

The electrode assembly 110, the first insulating member 120, the second insulating member 130, and the retainer 140 accommodated within the case 151 may be the same components as those described with reference to FIGS. 1 to **4****,** and thus detailed descriptions thereof may not be repeated.

The case 151 may form the overall outer appearance of the secondary battery 100. The case 151 may have openings at both ends (e.g., opposite ends) to receive therethrough the electrode assembly 110, the first insulating member 120, the second insulating member 130, and the retainer 140. The case 151 may be made of a conductive metal such as aluminum, an aluminum alloy, or a nickel-plated steel. In one or more embodiments, the case 151 may be made of stainless steel (SUS).

The first cap assembly 152 and the second cap assembly may seal the openings formed at both ends of the case 151 after the electrode assembly 110, the first insulating member 120, the second insulating member 130, and the retainer 140 are accommodated within the case 151.

The first cap assembly 152 may include a first electrode plate. A first electrode terminal 153 may be arranged on the first cap assembly 152. The first electrode plate and the first electrode terminal 153 may be electrically connected. The first electrode tab 111 of the electrode assembly 110 accommodated in the case 151 may be connected to the first electrode plate. The first electrode terminal 153 may be electrically connected to the first electrode of the electrode assembly 110 through the first electrode plate and the first electrode tab 111.

The first cap assembly 152 may include an electrolyte injection hole 154. The second cap assembly may also include the electrolyte injection hole 154 depending on the installation orientation of the case 151, but the present disclosure is not limited thereto. After the electrolyte is injected into the case 151 through the electrolyte injection hole 154, a sealing member may seal the electrolyte injection hole 154.

A vent 155 may be formed at one side of the case 151. The vent 155 is designed to rupture in the event of an increase in internal pressure within the case 151, allowing gas inside of the case 151 to be discharged to the outside.

The second cap assembly may include a second electrode plate. A second electrode terminal may be arranged on the second cap assembly. The second electrode plate and the second electrode terminal may be electrically connected. The second electrode tab 112 of the electrode assembly 110 accommodated in the case 151 may be connected to the second electrode plate. The second electrode terminal may be electrically connected to the second electrode of the electrode assembly 110 through the second electrode plate and the second electrode tab 112.

According to the secondary battery 100 described in FIGS. 1 to 5, the elastic retainer 140 is stretched and attached to the electrode assembly 110, the first insulating member 120, and the second insulating member 130, thereby fixing the first insulating member 120 and the second insulating member 130 to the electrode assembly 110. Furthermore, the thicknesses of the first insulating member 120 and the second insulating member 130 may be reduced to provide additional space within the case 151.

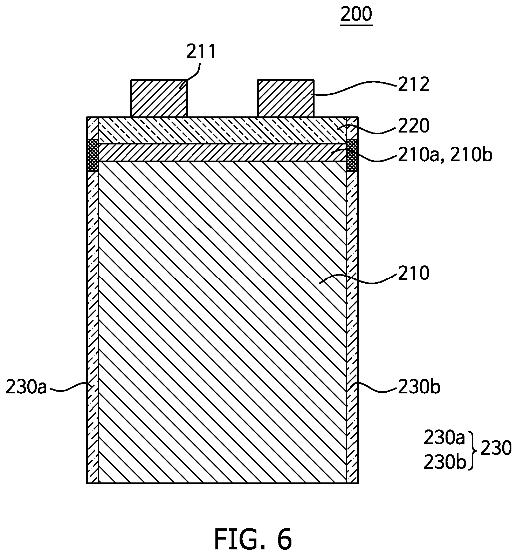

FIG. 6 is a cross-sectional view of a secondary battery 200 according to one or more embodiments of the present disclosure.

Referring to FIG. 6, the secondary battery 200 of one or more embodiments includes an electrode assembly 210, an insulating member 220, and a retainer 230.

The electrode assembly 210 may include a first electrode having a first electrode tab 211, a second electrode having a second electrode tab 212, and a separator. Here, the first electrode may be a positive electrode, and the second electrode may be a negative electrode, or vice versa. For example, the electrode assembly 210 may be a stacked-type (kind) electrode assembly in which the first electrode and the second electrode are alternately stacked with a separator in between. In another example, the electrode assembly 110 may be a wound-type (kind) electrode assembly 210 in which the first electrode and the second electrode are wound together with a separator, which serves as an insulator, interposed between the first and second electrodes. Alternatively, in one or more embodiments, the electrode assembly 210 may be configured as any other structure that includes the first electrode and the second electrode. The structures of the electrode assembly 210 described above are merely examples, and the present disclosure is not limited thereto.

The first electrode tab 211 may be separately formed and connected to an uncoated portion 210a of the first electrode, or may be formed by punching out a portion of the uncoated portion 210a. The first electrode tab 211 may extend from the uncoated portion 210a and may be inserted through the insulating member 220. Similarly, the second electrode tab 212 may be separately formed and connected to an uncoated portion 210b of the second electrode, or may be formed by punching out a portion of the uncoated portion 210b. The second electrode tab 212 may extend from the uncoated portion 210b and may be inserted through the insulating member 220.

The electrode assembly 210 may include the first electrode tab 211 and the second electrode tab 212, which are provided at the upper portion of the electrode assembly. In one or more embodiments, the first electrode tab 211 and second electrode tab 212 may be provided at the lower portion of the electrode assembly 210. In contrast to the secondary battery 200 described in FIGS. 1 to 5, the first electrode tab 211 and second electrode tab 212 of the electrode assembly 210 may be arranged in a single direction (that is, the first and second electrode tabs 211 and 212 may be placed on the same side). Hereinafter, for the sake of clarity, the structure in which the first electrode tab 211 and the second electrode tab 212 are provided at the upper portion of the electrode assembly 210 will be described in more detail.

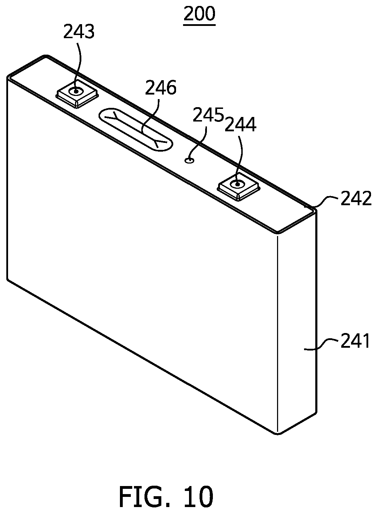

The insulating member 220 may be arranged on the upper portion of the electrode assembly 210. The insulating member 220 may serve as an insulator arranged between the electrode assembly 210 and a cap assembly 242 (see, *e.g.,* FIG. 10). The insulating member 220 may be fixedly arranged on the electrode assembly 210 by a retainer 230 attached to a side surface of (e.g., of each of) the electrode assembly 110 and the insulating member 220 (e.g., attached to a side surface of the electrode assembly 110 and a side surface of the insulating member 220).

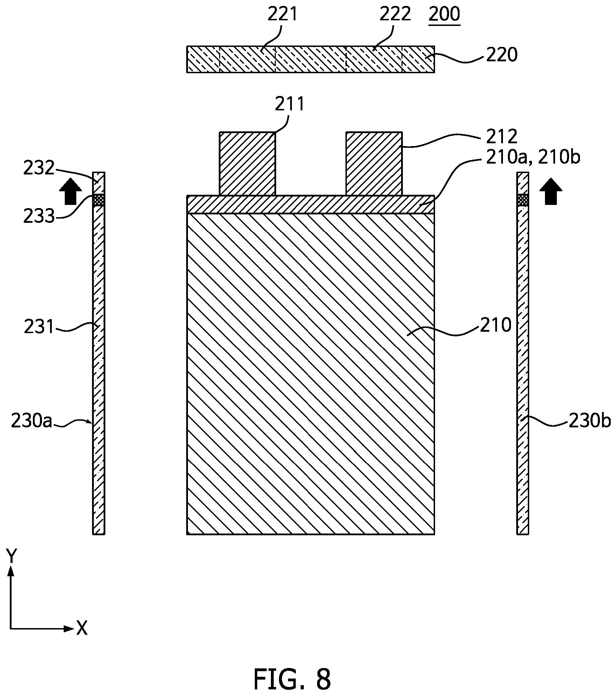

The insulating member 220 may include a first through-hole 221 *(see, e.g.,* FIG. 8) and a second through-hole 222 (*see, e.g.,* FIG. 8). The first electrode tab 211 and the second electrode tab 212 may be inserted through the first through-hole 221 and the second through-hole 222, respectively, thereby passing through the insulating member 220. The first electrode tab 211 and the second electrode tab 212 may be connected to a first electrode plate and a second electrode plate of the cap assembly 242, which may be arranged on the insulating member 220.

The retainer 230 may be elongated in length and attached to the electrode assembly 210 and the insulating member 220.

The retainer 230 may include a first retainer 230a and a second retainer 230b. The first retainer 230a may be attached to one side surface of each of the electrode assembly 210 and the insulating member 220. The second retainer 230b may be attached to the other side surface (e.g., the opposite side surface) of each of the electrode assembly 210 and the insulating member 220.

The retainer 230 may be in the form of a sheet, with one surface having adhesive properties for attachment to the electrode assembly 210 and the insulating member 220. In one or more embodiments, the opposite surface of the retainer 230 may also have adhesive properties.

The retainer 230 may be interposed between the case 241 (*see, e.g.,* FIG. 10), which accommodates the electrode assembly 210, and the side surfaces of the electrode assembly 210 and the insulating member 220. This configuration can prevent or reduce the movement of the electrode assembly 210 and protect the electrode assembly 210 from external impacts.

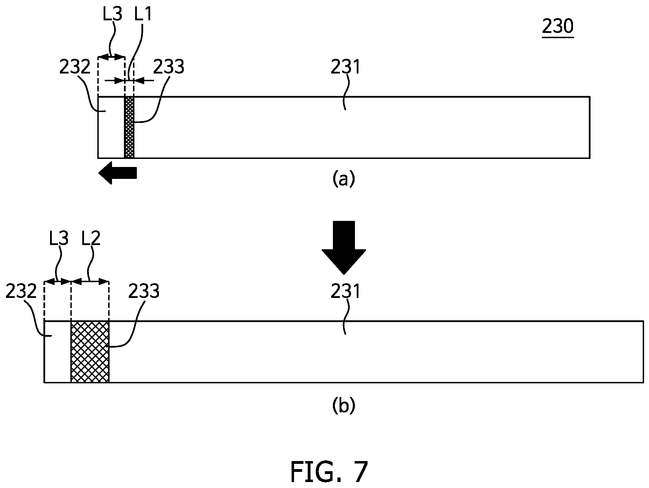

FIG. 7 is a side view of a retainer according to one or more embodiments of the present disclosure.

Referring to FIG. 7, the retainer 230 according to one or more embodiments of the present disclosure may include a first attachment portion 231, a second attachment portion 232, and an elastic portion 233.

The first attachment portion 231 may be attached to the electrode assembly 210. The first attachment portion 231 may have adhesion (e.g., may include an adhesive or have adhesive properties) on one surface for attachment to the electrode assembly 210. In one or more embodiments, the opposite surface of the first attachment portion 231 may also have adhesion, for example, for attachment to the case 151.

The second attachment portion 232 may be attached to the insulating member 220. The second attachment portion 232 may have adhesion (e.g., may include an adhesive or have adhesive properties) on one surface for attachment to the insulating member 220. In one or more embodiments, the opposite surface of the second attachment portion 232 may also have adhesion, for example, for attachment to the case 151.

Each of the first attachment portion 231 and the second attachment portion 232 may be a tape including an insulating material. Each of the first and second attachment portions may include an insulating material such as polyethylene, polyacetylene, polytetrafluoroethylene (PTFE), nylon, polyimide, polyethylene terephthalate, polypropylene, and/or the like. However, the present disclosure is not limited thereto.

The elastic portion 233 may be positioned between the first attachment portion 231 and the second attachment portion 232. The elastic portion 233 may be thermally fused to the first attachment portion 231 and the second attachment portion 232. However, the present disclosure is not limited thereto.

The elastic portion 233 may have elasticity. The elastic portion 233 may be stretched in a longitudinal direction and, once stretched, may exert an elastic force in a direction opposite to a stretching direction of the elastic portion 233.

As shown in (a) of FIG. 7, an unstretched length L1 of the elastic portion 233, which is a length before being stretched, may be smaller than a length L3 of the second attachment portion 232. As shown in (b) of FIG. 7, the retainer 230 may be stretched and attached to the side surfaces of the electrode assembly 210 and the insulating member 220. A stretched length L2 of the elastic portion 233, which is a length after being stretched, may be equal to or greater than the length L3 of the second attachment portion 232. The unstretched and stretched lengths L1 and L2 of the elastic portion 233, as well as the length L3 of the second attachment portion 232, may vary depending on the dimensions of the electrode assembly and the insulating member.

The elastic portion 233 may include a rubber material having elasticity. For example, the elastic portion 233 may include, but is not limited to, at least one of nitrile-butadiene rubber (NBR), natural rubber (NR), isoprene rubber (IR), butadiene rubber (BR), styrene-butadiene rubber (SBR), chloroprene rubber (CR), isobutylene isoprene rubber (IIR), ethylene propylene terpolymers (EPDM), or acrylic elastomers (ACM) having elasticity. In one or more embodiments, the elastic portion 233 may include, but is not limited to, a porous rubber material to provide elasticity.

In one or more embodiments, the elastic portion 233 may be formed from the same material as the first attachment portion 231 and the second attachment portion 232. For example, the entire retainer 230 may be entirely formed of the same material. In such embodiments, in order to provide elasticity to the elastic portion 233, the elastic portion 233 may be formed to have a thickness different from a thickness of each of the first attachment portion 231 and the second attachment portion 232. In one or more embodiments, an additional elastic layer may be formed on the elastic portion 233. Further, in one or more embodiments, elasticity may be imparted to the elastic portion 233 through a separate post-processing such as a perforation or a surface treatment.

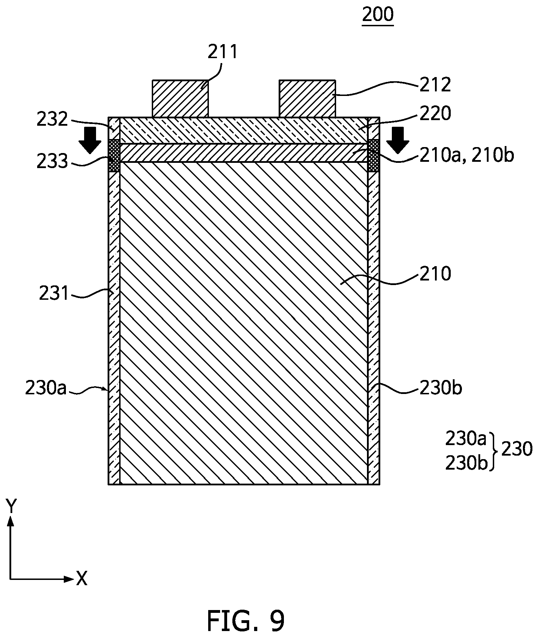

FIG. 8 is a cross-sectional view of a secondary battery before a retainer is attached, according to one or more embodiments of the present disclosure. FIG. 9 is a cross-sectional view of a secondary battery after a retainer is attached, according to one or more embodiments of the present disclosure.

Referring to FIG. 8, the elastic portion 233 according to one or more embodiments of the present disclosure may be stretched in a first direction. Here, the first direction (a positive Y-axis direction) corresponds to an upward direction toward the upper portion of the electrode assembly 210 on which the insulating member 220 is arranged.

The insulating member 220 may be arranged on the upper portion of the electrode assembly 210. The elastic portion 233 may be stretched to allow the second attachment portion 232 to be attached to the insulating member 220.

Referring to FIG. 9, the first attachment portion 231 is attached to the electrode assembly 210, and the second attachment portion 232 is attached to the insulating member 220.

The elastic portion 233 may exert an elastic force in the second direction, which is opposite to the first direction. By the elastic force of the elastic portion 233, the second attachment portion 232 may pull the insulating member 220 in the second direction to secure it to the electrode assembly 210.

FIG. 10 is a perspective view of a secondary battery according to one or more embodiments of the present disclosure.

Referring to FIG. 10, the secondary battery 200 according to one or more embodiments of the present disclosure may include the electrode assembly 210 (see, *e.g.,* FIG. 6), the case 241 accommodating the electrode assembly 210, and the cap assembly 242 that seals an opening of the case 241. The opening may be formed at one end of the case 241, and the cap assembly 242 may seal the opening formed at one end of the case 241. The electrode assembly 210, the insulating member 220, and the retainer 230 may be accommodated within the case 241. The insulating member 220 may be arranged between the electrode assembly 210 and the cap assembly 242. The retainer 230 may be attached to both side surfaces (e.g., opposite side surfaces) of the electrode assembly 210 and the insulating member 220 and arranged within the case 241.

The electrode assembly 210, the insulating member 220, and the retainer 230 accommodated within the case 241 may be the same components as those described with reference to FIGS. 6 to 9, and thus detailed descriptions thereof may not be repeated.

The case 241 may form the overall outer appearance of the secondary battery 200. The case 241 may have the opening at one end to receive therethrough the electrode assembly 210, the insulating member 220, and the retainer 230. The case 241 may be made of a conductive metal such as aluminum, an aluminum alloy, or a nickel-plated steel. In one or more embodiments, the case 241 may be made of stainless steel (SUS).

The cap assembly 242 may seal the opening formed at one end of the case 241 after the electrode assembly 210, the insulating member 220, and the retainer 230 are accommodated within the case 241.

The cap assembly 242 may include a first electrode plate and a second electrode plate. A first electrode terminal 243 and a second electrode terminal 244 may be arranged on the cap assembly 242.

The first electrode plate and the first electrode terminal 243 may be electrically connected. The first electrode tab 211 of the electrode assembly 210 accommodated in the case 241 may be connected to the first electrode plate. The first electrode terminal 243 may be electrically connected to the first electrode of the electrode assembly 210 through the first electrode plate and the first electrode tab 211.

Similarly, the second electrode plate and the second electrode terminal 244 may be electrically connected. The second electrode tab 212 of the electrode assembly 210 accommodated in the case 241 may be connected to the second electrode plate. The second electrode terminal 244 may be electrically connected to the second electrode of the electrode assembly 210 through the second electrode plate and the second electrode tab 212.

The cap assembly 242 may include an electrolyte injection hole 245 and a vent 246. After the electrolyte is injected into the case 241 through the electrolyte injection hole 245, a sealing member may seal the electrolyte injection hole 245. The vent 246 is designed to rupture in the event of an increase in internal pressure within the case 241, allowing gas inside of the case 241 to be discharged to the outside.

According to the secondary battery 200 described above, the elastic retainer 230 is stretched and attached to the electrode assembly 210 and the insulating member 220, thereby fixing the insulating member 220 to the electrode assembly 210. Furthermore, the thickness of the insulating member 220 may be reduced to provide additional space within the case 241.

The portable device, vehicle, and/or the secondary battery, e.g., a battery controller, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments, unless otherwise specifically indicated.

Although the present disclosure has been described above with respect to embodiments thereof, the present disclosure is not limited thereto. Various modifications and variations can be made thereto by those skilled in the art within the spirit of the present disclosure and the equivalent scope of the appended claims.

### REFERENCE NUMERALS

100: secondary battery
110: electrode assembly
110a: first uncoated portion
110b: second uncoated portion
111: first electrode tab
112: second electrode tab
120: first insulating member
121: first through-hole
130: second insulating member
131: second through-hole
140: retainer
140a: first retainer
140b: second retainer
141: first attachment portion
142: second attachment portion
143: third attachment portion
144: first elastic portion
145: second elastic portion
151: case
152: first cap assembly
153: first electrode terminal
154: electrolyte injection hole
155: vent
200: secondary battery
210: electrode assembly
210a: uncoated portion
210b: uncoated portion
211: first electrode tab
212: second electrode tab
220: insulating member
221: first through-hole
222: second through-hole
230: retainer
230a: first retainer
230b: second retainer
231: first attachment portion
232: second attachment portion
233: elastic portion
241: case
242: cap assembly
243: first electrode terminal
244: second electrode terminal
245: electrolyte injection hole
246: vent

## Claims

1. A secondary battery (100, 200) comprising:
an electrode assembly (110, 210) comprising
a first electrode tab (111, 211) and a second electrode tab (112, 212), wherein
A)
the first electrode tab (111) is arranged at an upper portion of the electrode assembly (110), and
the second electrode tab (112) is arranged at a lower portion of the electrode assembly (110);
a first insulating member (120) on the upper portion of the electrode assembly (110);
a second insulating member (130) on the lower portion of the electrode assembly (110); and
a retainer (140) stretched in length and attached to a side surface of each of the electrode assembly (110), the first insulating member (120), and the second insulating member (130),
or wherein
B)
the first electrode tab (211) and the second electrode tab (212) are both arranged at an upper portion of the electrode assembly (210); and the electrode assembly (110) comprises
an insulating member (220) on the upper portion of the electrode assembly (210); and
a retainer (230) stretched in length and attached to a side surface of each of the electrode assembly (210) and the insulating member (220).

2. **The** secondary battery (100) as claimed in claim 1, alternative A), wherein the retainer (140) comprises:
a first retainer (140a) attached to a first side surface of each of the electrode assembly (110), the first insulating member (120), and the second insulating member (130); and
a second retainer (140b) attached to a second side surface of each of the electrode assembly (110), the first insulating member (120), and the second insulating member (130),
the second side surfaces of the electrode assembly (110), the first insulating member (120), and the second insulating member (130) being opposite to the first side surfaces of the electrode assembly (110), the first insulating member (120), and the second insulating member (130).

3. **The** secondary battery (100) as claimed in claim 1 or 2, wherein the retainer (140) comprises:
a first attachment portion (141) attached to the electrode assembly (110);
a second attachment portion (142) attached to the first insulating member (120);
a third attachment portion (143) attached to the second insulating member (130);
a first elastic portion (144) between the first attachment portion (141) and the second attachment portion (142), the first elastic portion (144) having elasticity higher than the first attachment portion (141), the second attachment portion (142) or the third attachment portion (143); and
a second elastic portion (145) between the first attachment portion (141) and the third attachment portion (143), the second elastic portion (145) (145) having elasticity higher than the first attachment portion (141), the second attachment portion (142) or the third attachment portion (143).

4. The secondary battery (100) as claimed in claim 3, wherein the first elastic portion (144) is stretched in a first direction, and
the first direction corresponds to an upward direction toward the upper portion of the electrode assembly (110).

5. The secondary battery (100) as claimed in claim **4,** wherein the first elastic portion (144) exerts an elastic force in a second direction opposite to the first direction.

6. The secondary battery (100) as claimed in claim 5, wherein the second attachment portion (142) pulls the first insulating member (120) in the second direction by the elastic force of the first elastic portion (144) to secure the first insulating member (120) to the electrode assembly (110).

7. The secondary battery (100) as claimed in any of claims 3 to 6, wherein the second elastic portion (145) is stretched in a second direction, and
the second direction corresponds to a downward direction toward the lower portion of the electrode assembly (110).

8. The secondary battery (100) as claimed in claim 7, wherein the second elastic portion (145) exerts an elastic force in a direction opposite to the second direction.

9. The secondary battery (100) as claimed in claim 8, wherein the third attachment portion (143) pulls the second insulating member (130) in the direction opposite to the second direction by the elastic force of the second elastic portion (145) to secure the second insulating member (130) to the electrode assembly (110).

10. The secondary battery (100) as claimed in claim 3, wherein an unstretched length of the first elastic portion (144) is smaller than a length of the second attachment portion (142), and a stretched length of the first elastic portion (144) is equal to or greater than the length of the second attachment portion (142).

11. The secondary battery (200) as claimed in claim 1, alternative B), wherein the retainer (230) comprises:
a first retainer (230a) attached to a first side surface of each of the electrode assembly (210) and the insulating member (220); and
a second retainer (230b) attached to a second side surface of each of the electrode assembly (210) and the insulating member (220),
the second side surfaces of the electrode assembly (210) and the insulating member (220) being opposite to the first side surfaces of the electrode assembly (210) and the insulating member (220).

12. The secondary battery (200) as claimed in claim 11, wherein the retainer (230) comprises:
a first attachment portion (231) attached to the electrode assembly (210);
a second attachment portion (232) attached to the insulating member (220); and
an elastic portion (233) between the first attachment portion (231) and the second attachment portion (232), the elastic portion (233) having elasticity higher than the first attachment portion (231) or the second attachment portion (232).

13. The secondary battery (200) as claimed in claim 12, wherein the elastic portion (233) is stretched in a first direction, and
the first direction corresponds to an upward direction toward the upper portion of the electrode assembly (210).

14. The secondary battery (200) as claimed in claim 13, wherein the elastic portion (233) exerts an elastic force in a second direction opposite to the first direction.

15. The secondary battery (200) as claimed in claim **14,** wherein the second attachment portion (232) pulls the insulating member (220) in the second direction by the elastic force of the elastic portion (233) to secure the insulating member (220) to the electrode assembly (210).
